# EUROPÄISCHE PATENTANMELDUNG

(11) **EP 2 199 264 A1**
(43) Veröffentlichungstag der Anmeldung: **23.06.2010**
(21) Anmeldenummer: 09179486.7
(22) Anmeldetag: 16.12.2009
(51) Int. Cl.: C03C 17/25, C03C 17/00, C03C 17/02

(54) **Verfahren zur Herstellung eines hohlen Glasformkörpers mit hoher chemischer Beständigkeit**

(30) Priorität: 16.12.2008 DE 102008062881
(71) Anmelder: Schott AG, 55122 Mainz (DE)
(72) Erfinder: Henze, Inka, 55268 Nieder-Olm (DE); Schmitt, Hans-Joachim, 55437 Ockenheim (DE); Weber, Gerhard, 55234 Bechenheim (DE); Rothhaar, Uwe, 67134 Birkenheide (DE); Bicker, Matthias, Dr., 55126 Mainz (DE); Hormes, Robert, 9116 Wolfertswil (CH)
(74) Vertreter: Witte, Weller & Partner

(57) **Zusammenfassung**

Es wird ein Verfahren zur Herstellung eines hohlen Glasformkörpers angegeben, insbesondere einer Verpackung aus Glas für medizinische Anwendungen oder Pharmaanwendungen, insbesondere zur Herstellung von Fläschchen, Ampullen, Spritzen, mit den folgenden Schritten: (a) Bereitstellen eines hohlen Glasrohlings; (b) Umformen des Glasrohlings zu einem Glasformkörper; (c) Flüssigbeschichten der Innenoberfläche des Glasformkörpers mit einer Schutzschicht, die gegenüber dem Material des Glasrohlings eine erhöhte Beständigkeit gegen einen chemischen Angriff aufweist; (d) Verfestigen der Schutzschicht und (e) Kühlen des Glasformkörpers zur Reduzierung von Spannungen. Die Beschichtung besteht vorzugsweise aus einer Schutzschicht, die zumindest Zirkonoxid oder ein Mischoxid von Zirkonoxid mit einem anderen Oxid enthält.

## Beschreibung

Die Erfindung betrifft ein Verfahren zur Herstellung eines hohlen Glasformkörpers, insbesondere einer Verpackung aus Glas für medizinische Anwendungen oder Pharmaanwendungen, insbesondere zur Herstellung von Fläschchen, Ampullen, Spritzen.

Bei der Herstellung von Glasformkörpern, die bspw. als Pharmaverpackungen oder für medizinische Anwendungen verwendet werden, werden in der Regel Borosilikatgläser genutzt, die sich durch eine relativ hohe chemische Beständigkeit auszeichnen. Gleichwohl ist die chemische Beständigkeit von Borosilikatgläsern bekanntlich begrenzt, da sie in Kontakt mit Wasser und anderen Flüssigkeiten korrodieren. So kann insbesondere Wasser dem Glas Natriumionen entziehen.

Für zahlreiche Anwendungen von Glasformkörpern ist es daher notwendig, die chemische Beständigkeit zu erhöhen.

Hohle Glasformkörper, die eine erhöhte chemische Resistenz der inneren Oberfläche benötigen, werden bspw. im chemischen Anlagenbau eingesetzt, bei Durchflussmessern für chemisch aggressive Medien, für analytische Zwecke, für Reagenzgläser für spezielle Zwecke, für Ummantellungen von Messelektroden in aggressiven Medien, für Beleuchtungszwecke, z.B. Halogenlampen, für Entladungslampen, als Komponenten für biotechnologische Reaktoren und insbesondere als Behälter für medizinische und pharmazeutische Zwecke verwendet (z.B. Ampullen, Fläschchen, Spritzenkörper usw.).

Es ist zwar grundsätzlich bekannt, Glasrohre aus Quarzglas für die Herstellung von hohlen Glasformkörpern zu verwenden, die eine sehr hohe chemische Beständigkeit aufweisen. Jedoch ist die Herstellung und Verarbeitung solcher Glasformkörper wegen des hohen Schmelzpunktes des Kieselglases sehr aufwändig und teuer. Für eine Großserienfertigung kommen derartige Glasrohre somit nicht in Frage. Für die Großserienfertigung haben sich überwiegend niedrig schmelzende Gläser durchgesetzt, insbesondere Borosilikatgläser wegen ihrer, im Vergleich zu anderen niedrig schmelzenden Gläsern, relativ hohen chemischen Beständigkeit. Solche Gläser lassen sich in Rohrform vorteilhaft wirtschaftlich herstellen und umformen. Beispiele für solche Gläser sind von der Anmelderin hergestellte Borosilikatgläser, die unter den Marken Duran® oder Fiolax® vertrieben werden und insbesondere für Pharmafläschchen verwendet werden.

Es ist bekannt, solche Glasformkörper an ihrer Innenoberfläche mit einer Schutzschicht zu versehen, um eine verbesserte chemische Beständigkeit zu erzielen. Aus der GB 696,850 und der DE 1 421 844 A1 ist es bekannt, die Innenoberfläche eines solchen Glasformkörpers an Alkalimetallen zu verarmen, was zu einer verbesserten Beständigkeit führt. Eine Alkaliverarmung kann bspw. durch Begasung mit sauren Gasen (bspw. SO₂) erzielt werden. Hierzu wird in das noch heiße Glasrohr ein entsprechendes aggressives Gas (typischerweise SO₂ oder HCl-Gas) eingeleitet, das zu Oberflächenreaktionen und Reduzierung des Alkaligehaltes in der Oberfläche führt.

Nachteilig ist hierbei, dass überwiegend toxische Gase eingesetzt werden und die Glasoberflächenstruktur teilweise geschädigt werden kann, was einen korrosiven Angriff erleichtern kann.

Um die Nachteile der Alkaliverarmung zu vermeiden, ist es auch bekannt, rohrförmig ausgeformte Glasbehälter aus niedrig schmelzenden Glas, an ihrer Innenoberfläche mit einer Siliziumoxidschicht oder einer anderen Oxidschicht zu versehen, wodurch eine sehr beständige Innenoberfläche erzielt wird (vgl. DE 198 01 861 A1).

Hierbei wird die Innenoberfläche des Halbfabrikat-Glasrohres mit oxidischen Materialien in einer Schichtdicke beschichtet, die an die nachfolgenden Umformbedingungen für den Glasformkörper und die Anforderungen an die chemische Resistenz angepasst ist, und anschließend wird der Glasformkörper durch Umformen des innen beschichteten Halbfabrikat-Glasrohrs hergestellt. Die Innenoberfläche wird vorzugsweise mit einer oxidischen Materialschicht mit einer Dicke zwischen 1 nm und 500 nm beschichtet. Bei dem oxidischen Beschichtungsmaterial handelt es sich um SiO₂, Al₂O₃, TiO₂ oder Mischungen davon. Die Beschichtung der Innenoberfläche kann aus der Flüssigkeitsphase nach dem Sol-Gel-Verfahren oder durch Abscheiden aus einer mit dem oxidischen Beschichtungsmaterial übersättigte Lösung erfolgen. Bevorzugt erfolgt die Beschichtung der Innenoberfläche jedoch durch chemische Abscheidung des oxidischen Beschichtungsmaterials aus dessen Gasphase (CVD-Verfahren).

Während eine Abscheidung aus der Gasphase für eine Großserienfertigung ein sehr aufwändiges und teures Verfahren darstellt, haben sich bei der Beschichtung der Innenoberfläche nach dem Sol-Gel-Verfahren nicht immer zufriedenstellende Lösungen mit ausreichender chemischer Beständigkeit ergeben. Zudem besteht die Gefahr, dass diese Schicht bei einer erneuten Heißumformung beschädigt wird, d.h. dass Risse oder Abplatzungen erzeugt werden.

Gemäß der japanischen Patentanmeldung 11-099192 (Patent Abstracts of Japan) wird die Innenoberfläche eines Glasbehälters zur Aufnahme eines radioaktiven Medikaments mit Siliziumoxid beschichtet. Hierzu wird Silangas oder eine Siliziumwasserstoffverbindung als thermisch volatile Siliziumverbindung verwendet, um durch eine Wärmebehandlung Siliziumoxid abzuscheiden.

Auch eine derartige Behandlung ist aufwändig und teuer. Auch sind die verwendeten Gase giftig bzw. explosiv.

Aus der japanischen Patentanmeldung 07-041335 (Patent Abstracts of Japan) ist ferner die Beschichtung eines Glasbehälters mit einer Behandlungslösung bekannt, die Siliziumfluorwasserstoffsäure aufweist, in der Siliziumdioxid in einem übersättigtem Zustand enthalten ist. Durch dieses Verfahren wird eine Siliziumdioxidschicht auf der Innenoberfläche ausgebildet, die anschließend durch Wärmebehandlung verdichtet wird.

Nachteilig bei diesem Verfahren ist die Verwendung von umweltschädlichen säurehaltigen Materialien.

Aus der EP 1 138 639 A2 ist ferner ein Heißformgebungsverfahren zur Herstellung eines Glaskörpers aus einer Glasschmelze bekannt, bei dem die Oberfläche des Glaskörpers während der Heißformgebung wenigstens teilweise einer bestimmten Gasatmosphäre mit einstell- und regelbarem Sauerstoffgehalt ausgesetzt wird, wobei der Oberflächenzustand des Glaskörpers über den einstellbaren Sauerstoffgehalt der Gasatmosphäre verändert und eingestellt wird. Die Gasatmosphäre enthält neben Sauerstoff vorzugsweise weitere Gase, insbesondere Stickstoff, Edelgase, CO₂, SO₂ und/oder Wasser. Die Oberfläche des Glasrohrs wird hierbei beim Ziehvorgang mittels der besonders eingestellten Atmosphäre behandelt, um so ein Halbzeug für die Herstellung von Glasformkörper mit erhöhter Beständigkeit zu erhalten. Das Halbzeug wird zur Herstellung der Glasformkörper dann noch durch einen Umformvorgang behandelt.

Jedoch hat sich gezeigt, dass durch den nachfolgenden Umformvorgang selbst bei entsprechend vorbehandelten Halbzeugen, nicht immer die notwendige chemische Beständigkeit erreicht wird.

Aus der WO 03/099735 A2 ist ferner ein Substrat aus Glas oder Glaskeramik mit einer Schutzschicht auf der Basis von Titanoxid/Ceroxid bekannt. Die Schutzschicht wird durch Aufbringen eines Precursors in einem Sol-Gel-Verfahren erzeugt, der anschließend bei mindestens 500 °C verdichtet wird.

Auch hiermit wird nicht immer die gewünschte chemische Beständigkeit erzielt.

Aus der EP 0 038 863 A1 ist ferner ein Verfahren zur Erhöhung der chemischen Beständigkeit von Glasprodukten bekannt, bei dem eine in einem Lösungsmittel vorliegende metallorganische Verbindung mittels einer Sprühpistole fein vernebelt wird und auf einem heißen Substrat von ca. 540 °C oder mehr aufgetragen wird. Bei einem solchen Sprühpyrolyseverfahren werden die Tröpfchen schlagartig getrocknet und pyrolysiert. Dabei werden sie in eine gewünschte keramische Phase überführt.

Bei der Sprühpyrolyse entstehen häufig Partikel, die insbesondere bei einer Verwendung als Pharmapackmittel unerwünscht sind. Auch ist hierbei vorgesehene Verwendung von Halogenen bei Pharmapackmitteln eher unerwünscht.

Vor diesem Hintergrund liegt der Erfindung die Aufgabe zugrunde, ein verbessertes Verfahren zur Herstellung eines hohlen Glasformkörpers anzugeben, der insbesondere für eine Verpackung aus Glas für medizinische Anwendungen oder Pharmaanwendungen verwendbar ist, und mit dem eine hohe chemische Beständigkeit der fertigen Glasformkörper an ihrer Innenoberfläche erzielt werden kann, ohne dass der Prozess deshalb aufwändig gestaltet werden muss.

Diese Aufgabe wird durch ein Verfahren zur Herstellung eines hohlen Glasformkörpers, insbesondere einer Verpackung aus Glas für medizinische Anwendungen oder Pharmaanwendungen, insbesondere zur Herstellung von Fläschchen, Ampullen, Spritzen, mit den aufeinander folgenden Schritten gelöst:
(a) Bereitstellen eines hohlen Glasrohlings;
(b) Umformen des Glasrohlings zu einem Glasformkörper;
(c) Flüssigbeschichten der Innenoberfläche des Glasformkörpers mit einer Schutzschicht, die gegenüber dem Material des Glasrohlings eine erhöhte Beständigkeit gegen einen chemischen Angriff aufweist;
(d) Verfestigen der Schutzschicht bei erhöhter Temperatur;
(e) Kühlen des Glasformkörpers zur Reduzierung von Spannungen.

Die Erfindung wird auf diese Weise vollkommen gelöst.

Während im Stand der Technik etwa gemäß der DE 198 01 861 A1 zunächst eine Schutzschicht auf die Innenoberfläche des Glasformkörpers erzeugt wird, bevor eine Umformung zur Herstellung eines Glasformkörpers erfolgt, wird erfindungsgemäß der Glasformkörper zunächst nach seiner Herstellung, etwa durch ein Ziehverfahren, zu dem Glasformkörper umgeformt und erst anschließend eine Beschichtung der Innenoberfläche des Glasformkörpers mit einer Schutzschicht durchgeführt.

Es hat sich gezeigt, dass mit einem derartigen Verfahren eine deutlich verbesserte chemische Beständigkeit des Glasformkörpers, insbesondere gegen Alkaliauslaugung, erzielbar ist.

In bevorzugter Weiterbildung der Erfindung wird der Glasrohling nach dem Schritt (b) vor dem Schritt (c) gewaschen, vorzugsweise mit deionisiertem Wasser bei erhöhter Temperatur.

In weiter bevorzugter Ausgestaltung der Erfindung wird der Glasformkörper nach dem Schritt (e) gewaschen, vorzugsweise mit deionisiertem Wasser bei erhöhter Temperatur.

Auf diese Weise wird eine hochreine Innenoberfläche erzeugt, die insbesondere zur Aufnahme von Pharmazeutika geeignet ist.

Die Auftragung der Schutzschicht kann durch alle gängigen Verfahren erfolgen, insbesondere durch Tauchen, Sprühen, Fluten oder Gießen.

Im Gegensatz zu anderen bekannten Verfahren, wie etwa der Sprühpyrolyse, erfolgt die Flüssigkeitsauftragung im Rahmen dieser Erfindung bei einer Temperatur des Glasformkörpers, die unterhalb des Siedepunkts der Flüssigkeit liegt, also in der Regel bei Temperaturen unterhalb von 100 °C.

Bei einer Sprühauftragung kann eine Applizierung beispielsweise durch Zweistoffdüsen, Flüssigdüsen oder Ultraschallvernebler erfolgen. Die Tröpfchengrößenverteilung beim Austritt aus der Düse ist bevorzugt <50 µm, insbesondere <30 µm, bevorzugt <11 µm.

Erfolgt ein Auftragen durch Fluten, so wird die flüssige Lösung bevorzugt innerhalb von 1 bis 10 Sekunden, vorzugsweise von 3 bis 5 Sekunden, in die Glasformkörper eingefüllt.

Es ist vorteilhaft, wenn die Lösung eine gewisse Verweilzeit im Glasformkörper verbleibt, bevor diese wieder entfernt wird. Verweilzeiten liegen bei 0,1 Sekunden bis 60 Minuten, bevorzugt bei 0,5 Sekunden bis 15 Minuten, besonders bevorzugt zwischen einer Sekunde und einer Minute.

Das Entfernen der Lösung kann auf unterschiedliche Arten erfolgen. Die einfachste Variante ist das Auskippen der Lösung.

Bessere Schichthomogenitäten werden durch Aussaugen oder Ablassen der Lösung aus dem Glasformkörper erreicht. Die Absauggeschgwindigkeit liegt bevorzugt zwischen 1 und 8 mm/s, besonders bevorzugt zwischen 2 und 4 mm/s. Diese Geschwingidkeit bezieht sich auf die Veränderung der Füllstandshöhe pro Zeiteinheit.

Auch kann die Beschichtung bevorzugt mittels eines Sol-Gel-Verfahrens erzeugt und anschließend aufgetragen werden.

Bevorzugte Temperaturen zum Verdichten der Sol-Gel-Schichten liegen bei mehr als 280 °C, bevorzugt bei mehr als 300 °C.

Vorzugsweise wird die Beschichtung nach der Applizierung auf die Innenoberfläche des Glasformkörpers bei erhöhter Temperatur verfestigt, insbesondere vernetzt bzw. ausgehärtet.

Auf diese Weise ergibt sich eine erhöhte Beständigkeit der Beschichtung.

Bevorzugt erfolgt die Verfestigung bei einer Temperatur von mindestens 250 °C, bevorzugt mehr als 280 °C, besonders bevorzugt bei mehr als 300 °C erfolgt.

Dabei werden vorzugsweise die Schritte (d) und (e) kombiniert.

Vorzugsweise erfolgt das Verfestigen und Kühlen des Glasformkörpers gemäß Schritt (d) und (e) bei einer Temperatur T, die zwischen T10¹³ - 100 K und T10¹³ + 100 K liegt, wobei T10¹³ die Glastemperatur bezeichnet, bei der das Glas eine Viskosität η von 10¹³ dPas aufweist.

Bei der Verwendung von typischen Borosilikatgläsern, wie etwa Fiolax® erfolgt die Verfestigung und Kühlung bei etwa 460-665 °C, weiter bevorzugt bei 500-625 °C, weiter bevorzugt bei 530-600 °C. Bei Fiolax® liegt T10¹³ bei etwa 560 - 565 °C.

Durch die Kombination des Kühlvorgangs mit dem Verfestigungsvorgang der Beschichtung kann auf einen zusätzlichen Verfahrensschritt verzichtet werden, was zu einer besonders einfachen und kostengünstigen Produktion führt.

Alternativ statt der Herstellung etwa durch ein Sol-Gel-Verfahren, kann die Beschichtung auch durch zumindest teilweises Zersetzen einer Ausgangsverbindung bei erhöhter Temperatur erzeugt werden.

Hierzu kann die Beschichtung etwa durch Zersetzung einer Silikonschicht erzeugt werden, die bei erhöhter Temperatur verglast.

In alternativer Ausgestaltung der Erfindung wird die Aufgabe durch ein Verfahren zur Herstellung eines hohlen Glasformkörpers, insbesondere einer Verpackung aus Glas für medizinische Anwendungen oder Pharmaanwendungen, insbesondere zur Herstellung von Fläschchen, Ampullen, Spritzen, mit den folgenden Schritten gelöst:
(a) Bereitstellen eines hohlen Glasrohlings;
(b) Umformen des Glasrohlings zu einem Glasformkörper;
(c) Beschichten der Innenoberfläche des Glasformkörpers mit einer oxidischen Schutzschicht, die eine gegenüber dem Material des Glasrohlings erhöhte Beständigkeit gegen einen chemischen Angriff aufweist;
(d) Kühlen des Glasformkörpers zur Reduzierung der Spannungen,
(e) wobei die Schutzschicht zumindest Zirkonoxid oder ein Mischoxid von Zirkonoxid mit einem anderen Oxid, enthält.

Auch auf diese Weise wird die Aufgabe der Erfindung vollkommen gelöst. Dieses Verfahren lässt sich auch vorteilhaft mit dem zuvor beschriebenen Verfahren kombinieren.

Es hat sich gezeigt, dass dann, wenn die Schutzschicht zumindest Zirkonoxid oder ein Mischoxid von Zirkonoxid mit einem anderen Oxid enthält, vorzugsweise ein Mischoxid aus Zirkonoxid und Titanoxid, eine deutlich verbesserte chemische Beständigkeit gegenüber herkömmlichen Glasformkörpern erzielt wird.

Neben Zirkonoxid kann die Schutzschicht auch Titanoxid, Siliziumoxid, Zinnoxid, Aluminiumoxid oder Mischoxide hiervon enthalten.

Die Schutzschicht führt insbesondere zu einer erhöhten Auslaugbeständigkeit, insbesondere gegen Alkaliauslaugung.

Nach der Aushärtung der Schutzschicht weist diese eine sehr niedrige offene Porosität auf, die kleiner als 5 %, bevorzugt kleiner als 2 % ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile ergeben sich aus der nachfolgenden Beschreibung bevorzugter Ausführungsbeispiele.

### Beispiel 1

1,8 Tetraisopropyltitanat und 0,95 g Zirkontetrachlorid wurden in 25 ml Ethanol gelöst. Die Lösung wurde dann mit Ethylacetat auf 100 ml aufgefüllt. Ein durch Ziehen und nachfolgendes Heißumformen hergestelltes Fläschchen aus dem Borosilikatglas Fiolax® wurde mit der Lösung befüllt und nach einer Standzeit von etwa 1 min wieder ausgeleert. Das Fläschchen wurde kopfüber stehend 10 min bei Raumtemperatur stehen gelassen und anschließend 1 Std. bei 500 °C eingebrannt.

Anschließend erfolgte eine Prüfung der Auslaugbeständigkeit gegenüber deionisiertem Wasser nach ISO 4802-2. Hierzu wurden die zu prüfenden Fläschchen mit deionisiertem Wasser gefüllt und anschließend 1 Std. bei 121 °C autoklaviert. Es ergab sich eine etwa um 50 % niedrigere Natriumauslaugung im Vergleich zu unbeschichteten Referenzfläschchen aus Fiolax®, die abgesehen von der Beschichtung mit den gleichen Parametern hergestellt waren. Bei den unbeschichteten Referenzfläschchen ergab sich eine Natriumauslaugung von 0,63 mg/l Na, während bei den beschichteten Fläschchen nur 0,31 mg/l Na nachgewiesen wurden.

Bei den Versuchen wurde Reinstwasser (Qualität 1 der IN ISO 3696) verwendet (elektrische Leitfähigkeit 0,055 - 1 µS/cm).

## Patentansprüche

1. Verfahren zur Herstellung eines hohlen Glasformkörpers, insbesondere einer Verpackung aus Glas für medizinische Anwendungen oder Pharmaanwendungen, insbesondere zur Herstellung von Fläschchen, Ampullen, Spritzen, mit den aufeinander folgenden Schritten:
(a) Bereitstellen eines hohlen Glasrohlings;
(b) Umformen des Glasrohlings zu einem Glasformkörper;
(c) Flüssigbeschichten der Innenoberfläche des Glasformkörpers mit einer Schutzschicht, die gegenüber dem Material des Glasrohlings eine erhöhte Beständigkeit gegen einen chemischen Angriff aufweist;
(d) Verfestigen der Schutzschicht bei erhöhter Temperatur;
(e) Kühlen des Glasformkörpers zur Reduzierung von Spannungen.

2. Verfahren nach Anspruch 1, bei dem der Glasrohling nach dem Schritt (b) vor dem Schritt (c) gewaschen wird, vorzugsweise mit deionisiertem Wasser bei erhöhter Temperatur.

3. Verfahren nach Anspruch 1 oder 2, bei dem der Glasformkörper nach Schritt (e) gewaschen wird, vorzugsweise mit deionisiertem Wasser bei erhöhter Temperatur.

4. Verfahren nach einem der vorhergehenden Ansprüche, bei dem die Beschichtung durch Tauchen, Sprühen, Fluten oder Gießen aufgetragen wird.

5. Verfahren nach einem der vorhergehenden Ansprüche, bei dem die Beschichtung durch zumindest teilweise Zersetzung einer Ausgangsverbindung bei erhöhter Temperatur erzeugt wird.

6. Verfahren nach Anspruch 5, bei dem die Beschichtung durch Zersetzung einer Silikonschicht erzeugt wird, die bei erhöhter Temperatur verglast, vorzugsweise bei einer Temperatur von mindestens 300 °C.

7. Verfahren nach einem der Ansprüche 1-4, bei dem die Beschichtung mittels eines Sol-Gel-Verfahrens aufgetragen wird.

8. Verfahren nach einem der vorhergehenden Ansprüche, bei dem die Beschichtung nach der Applizierung auf der Innenoberfläche des Glasformkörpers bei erhöhter durch vernetzen oder ausgehärten verfestigt wird.

9. Verfahren nach Anspruch 8, bei dem die Verfestigung bei einer Temperatur von mindestens 250 °C, bevorzugt mehr als 280 °C, besonders bevorzugt bei mehr als 300 °C erfolgt, wobei vorzugsweise die Schritte (d) und (e) kombiniert werden.

10. Verfahren nach einem der vorhergehenden Ansprüche, bei dem das Verfestigen und Kühlen des Glasformkörpers gemäß der Schritte (d) und (e) bei einer Temperatur T erfolgt, die zwischen T10¹³ - 100 K und T10¹³ + 100 K liegt, wobei T10¹³ die Glastemperatur bezeichnet, bei der das Glas eine Viskosität η von 10¹³ dPas aufweist.

11. Verfahren nach einem der vorhergehenden Ansprüche, bei dem die Umformung des Glasrohlings im Schritt (b) bei einer Temperatur von mindestens 1000 °C, bevorzugt bei mindestens 1100 °C erfolgt.

12. Verfahren zur Herstellung eines hohlen Glasformkörpers, insbesondere einer Verpackung aus Glas für medizinische Anwendungen oder Pharmaanwendungen, insbesondere zur Herstellung von Fläschchen, Ampullen, Spritzen, insbesondere nach einem der vorhergehenden Ansprüche, mit den folgenden Schritten:
(a) Bereitstellen eines hohlen Glasrohlings;
(b) Umformen des Glasrohlings zu einem Glasformkörper;
(c) Beschichten der Innenoberfläche des Glasformkörpers mit einer oxidischen Schutzschicht, die eine gegenüber dem Material des Glasrohlings erhöhte Beständigkeit gegen einen chemischen Angriff aufweist;
(d) Kühlen des Glasformkörpers zur Reduzierung der Spannungen,
(e) wobei die Schutzschicht zumindest Zirkonoxid oder ein Mischoxid von Zirkonoxid mit einem anderen Oxid, enthält.

13. Verfahren nach Anspruch 12, bei dem die Schutzschicht neben Zirkonoxid oder einem Mischoxid hiervon, Titanoxid, Siliziumoxid, Zinnoxid, Aluminiumoxid oder ein Mischoxid hiervon enthält.

14. Verfahren nach Anspruch 13, bei dem die Schutzschicht ein Mischoxid aus Zirkonoxid und Titanoxid enthält.

15. Verfahren nach einem der vorhergehenden Ansprüche, bei dem die Schutzschicht eine erhöhte Auslaugbeständigkeit, insbesondere gegenüber Alkaliauslaugung, aufweist.
